# EUROPEAN PATENT APPLICATION

(11) **EP 3 016 045 A1**
(43) Date of publication of application: **04.05.2016**
(21) Application number: 15191548.5
(22) Date of filing: 26.10.2015
(51) Int. Cl.: G06Q 10/06

(54) **CUSTOMER CONFIGURABLE SUPPORT SYSTEM**

(30) Priority: 29.10.2014 US 201414527286
(71) Applicant: Honeywell International Inc., Morris Plains, NJ 07950 (US)
(72) Inventor: KOLANDAVELU, Raghupathy, Morris Plains, NJ New Jersey 07950 (US); VANDERZWEEP, Jeff, Morris Plains, NJ New Jersey 07950 (US); FELKE, Tim, Morris Plains, NJ New Jersey 07950 (US); BEGUR, N R, Morris Plains, NJ New Jersey 07950 (US)
(74) Representative: Houghton, Mark Phillip

(57) **Abstract**

A customer configurable support system and methods for controlling the same are provided. The customer configurable support system, for example, may include, but is not limited to, a memory configured to store control data and production data, the production data comprising data used by each of the plurality of customer systems to control the operation of at least one configurable component for each of the plurality of customer systems, and a processor communicatively coupled to the memory, the processor configured to receive work package data, the work package data including a first update to at least one of the control data and the production data stored in the memory, receive a selection of at least a subset of the plurality of customer system to receive the work package data, and transmit the work package data to the selected plurality of customer systems.

## Description

### TECHNICAL FIELD

The present disclosure generally relates tosupport systems, and more particularly relates toa support system for modular components.

### BACKGROUND

In the current global environment, there is a need to be able to provide support for customers anywhere in the world. However, when each customer may have different systems having different configurations, providing support for all of the variations can become complicated.

### BRIEF SUMMARY

In one embodiment, for example, a customer configurable support system, is provided. The customer configurable support system may include, but is not limited to, a memory configured to store control data, the control data indicating a configuration for each a plurality of customer systems, the memory further configured to store production data, the production data comprising data used by each of the plurality of customer systems to control the operation of at least one configurable component for each of the plurality of customer systems, and a processor communicatively coupled to the memory, the processor configured to receive work package data, the work package data including a first update to at least one of the control data and the production data stored in the memory, receive a selection of at least a subset of the plurality of customer system to receive the work package data, and transmit the work package data to the selected plurality of customer systems.

In another embodiment, a method for controlling a customer configurable support system is provided. The method may include, but is not limited to, receiving, by a processor of an administrator system communicatively coupled to a plurality of customer systems, work package data, the work package data including at least one update for a configurable component in at least one of the plurality of customer systems, receiving, by the processor of the administrator system, a selection of the customer systems to receive the work package data, transmitting, by the processor of the administrator system to a processor of the selected customer systems, the work package data, storing, by the processor of the selected customer systems, the work package data in memory, receiving, by the processor of the selected customer systems, an approval, rejection or modification for each of the at least one updates, and updating, by the processor of the selected customer systems, control data indicating a configuration for each a plurality of customer systems and production data comprising data used by each of the plurality of customer systems to control the operation of the configurable component based upon the received approval, rejection or modification for each of the at least one updates.

In yet another embodiment,a customer system in a customer configurable support system is provided. The customer system may include, but is not limited to, a plurality of configurable components, a memory configured to store control data, the control data indicating a hardware and software configuration of the plurality of configurable components, the memory further configured to store production data, the production data comprising data used to control operation of at least one of the plurality of configurable components, anda processor communicatively coupled to the memory, the processor configured to receive, from an administrator system, work package data, the received work package data including at least one update to at least one of the control data and production data stored in the memory, receive an approval, rejection or modification to each of the at least one updates in the received work package data, andtransmitting to the administration system updated work package data based upon the approval, rejection or modification to each of the at least one updates in the received work package data.

### BRIEF DESCRIPTION OF THE DRAWINGS

The detailed description will hereinafter be described in conjunction with the following drawing figures, wherein like numerals denote like elements, and wherein:
FIG. 1 is a block diagram of a customer configurable support system, in accordance with an embodiment; and
FIG. 2 is a flow diagram illustrating an exemplary method for operating the CCSS 100, in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

In accordance with one embodiment, acustomer configurable support system is provided. The customer configurable support system includes an administrator system and at least one customer system. The administrator system provides updates to only selected customer systems in the form of work package data thereby controlling the distribution of the updates.By providing updates to only selected customer systems, the administrator system can better control the distribution of updates. As discussed in further detail below, the work package data includes an update to at least one of control data and production data stored in a memory of the respective customer system.Furthermore, as discussed in further details below, users of the selected customer systems can approve, reject or modify any of the updates received from the administrator system, thereby allowing each customer system the ability to ultimately control how and when their respective system is updated.

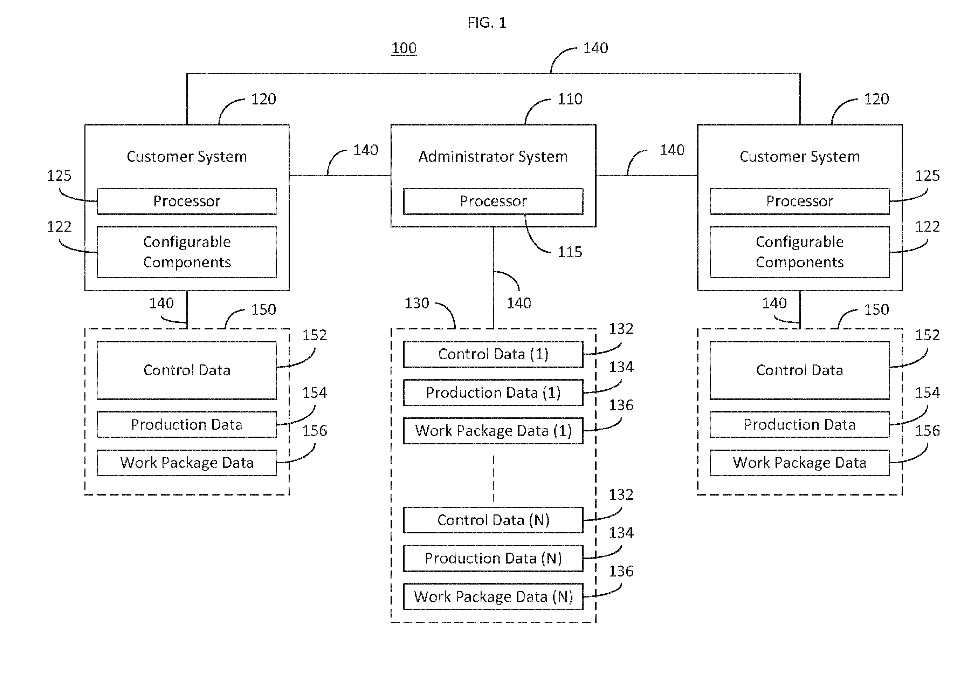

FIG. 1 is a block diagram of a customer configurable support system 100, in accordance with an embodiment. The customer configurable support system 100 (hereinafter CCSS 100) includes an administrator system 110. The administrator system 110 supports one or more customer systems 120. While the embodiment illustrated in FIG. 1 include two customer systems 120, one of ordinary skill in the art would recognize that the CCSS 100could support any number of customer systems 120.

Each customer system 120 is a modular system having one or more configurable components 122. The configurable components 122 may vary depending upon the purpose of each customer system 120. Each customer, for example, may start with the same baseline system. Changes to that baseline system are managed at the administrator system 110 and then deployed to each customer system 120. Additionally, each customer can make their own custom alteration of their respective customer system 120. As discussed in further detail below, changes made by the customer are transmitted back to the administrator system 120 so that any subsequent updates from the administrator system 120 are not contrary to the custom changes made locally. The configurable components 122 can include, for example, one or more configurable software modules and/or hardware modules. As discussed in further detail below, the administrator system 110 provides support for the customer system in the form of updates for the configurable components 122.

In one embodiment, for example, the configurable components 122 may include a standardized execution application module. The standardized execution application module may be a basic, un-modifiable software object containing instructions to perform one of a plurality of different standardized functions after being configured by control data and production data.

The administrator system 110 includes a processor 115. The processor 115 may be a central processing unit (CPU), a graphics processing unit (GPU), a physics processing unit (PPU), a field programmable logic array (FPGA), a microprocessors, or any other logic device or combination thereof. The processor 115 is communicatively coupled to a memory 130 via a communication bus 140. The communication bus may be any wired or wireless bus utilizing any communication protocol. While the memory 130 is illustrated as being separate from the administration system 110 in FIG. 1, one of ordinary skill in the art would recognize that the memory 130 may be part of the same system (i.e., the same computer or server) or may be separate, but communicatively coupled to the processor 115 through any communication bus or communication system.

The memory 130 may be one or more non-volatile memories or any combination of non-volatile and volatile memories. The memory 130 stores instructions which when executed by the processor 115 implement the CCSS 100, as discussed in further detail below.

The memory 130 further stores control data 132. The control data 132 includesdata on how each customer system 120 is built and configured. The control data 132, for example, may include configuration data including data on how each configurable components 122 is configured, data on how each configurable components 122 is coupled to other configurable components 122, and data on how each configurable component 122 interacts with respect to other configurable components 122. The configuration data may include one or more schema specifications, conflict scripts, triggered behavior scripts, master console databases, data package types, product hierarchies, product hierarchy mappings, user groups, user roles, view specifications, task specifications, shared report specifications, help text, conflict severity levels, conflicts tied to task specifications, product nodes to database server mappings, or the like.

The memory 130 further stored production data 134 for each customer system 120. The production data 134 stored in the memory 130 of the administrator system 110 mirrors production data 154 stored in a customer system 120. As discussed in further detail below, the production data 154 for a customer system 120 controls the operation of at least one of the configurable components 122 in a respective customer system 120. In one embodiment, for example, the production data 134 includes one or more applications, application configuration files, models, templates, asset schematics, asset functional modes, asset serial data definitions, asset symptom definitions, asset fault model definitions, assets calibration definitions, asset configuration definitions, asset option definitions, logistic model data, or the like. The configurable components 122, for example, may perform a function, such as fault diagnosis, tracking (e.g., an employee monitoring system), or the like, based upon the production data 134. The configurable components 122 could also include, for example, specific components owned and managed by a customer (e.g., a customer controller, a customer actuator, a customer switch, or the like) and/orgeneric versions of controllers, actuators, switches, or the like.

The memory 130 further includes at least one set of work package data 136. The work package data 136 includes proposed changes to a respective set of production data 134 and/or control data 132 corresponding to one or more customer systems 120. When a user of the administrator system 110 modifies the control data 132 and/or production data 134 stored in the memory 130 of the administrator system 110 for one or more of the customer systems 120, the work package data 136 is created. The work package data 136 may be a complete set of modified control data 132 and/or productiondata 134. However, the work package data could alternatively be a delta file which stores the changes made of a respective set of control data 132 and/or production data 134. The work package data 136 may include one or more of an updates one or more configurable components 122 in one or more customer systems 120. The updates, for example, may be data updates describing hardware or software updates that the customer system 120 needs to support. For example, an update from the administrator system could push out configuration information to selectively push out updated details on a system (hardware, software, etc.) based on how that system is configured according to the control data 132 for the respective customer system 120 stored in the memory 130 of the administrator system 110.

The customer system 120 also includes a processor 125. The processor 125 may be a central processing unit (CPU), a graphics processing unit (GPU), a physics processing unit (PPU), a field programmable logic array (FPGA), a microprocessors, or any other logic device or combination thereof. The processor 125 is communicatively coupled to a memory 150 via a communication bus 140. The communication bus 140 may be any wired or wireless bus utilizing any communication protocol.

The memory 150 may be one or more non-volatile memories or any combination of non-volatile and volatile memories. The memory stores control data 152, production data 154 and, when available, work package data 156. The control data 152 includes configuration data defining how the configurable components 122 of the consumer system 120 are configured and arranged, as discussed above. The production data 154 includes the applications and/or data used by the configurable components 122 to perform one or more functions. The work package data 156 may include proposed changes to the control data 152 and/or production data 154 received from the administrator system 110 or proposed changes to the control data 152 and/or production data 154 created by a user of the customer system 120, as discussed in further detail below.

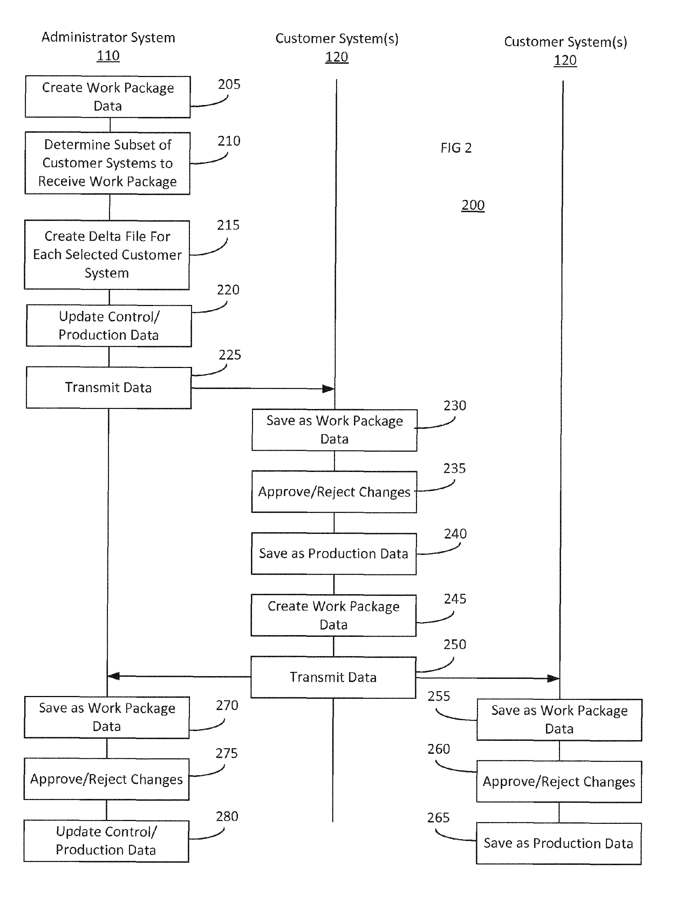

FIG. 2 is a flow diagram illustrating an exemplary method 200 for operating the CCSS 100, in accordance with an embodiment. The method 200illustrated in FIG. 2 begins when work package data 136is created. (Step 205). As discussed above, the work package data136 is a proposed change to the control data 132 and/or production data 134 for one or more customer systems 120. The work package data 136 can include an update to software and/or hardware modules in one or more customer systems 120 for one or more configurable components 122 in the customer systems 120. The work package data 136 may be created, for example, using one or more master consoles, grid editors, relationship editors, crosstab editors, graphic modeling tools, expression editors, screen layout tools, or the like.

A user of the administrator system 110 then selects which customer systems 120 will receive the work package data 136. (Step 210). While one customer system 120, a subset of the customer systems 120 or all of the customer systems 120 may have a specific hardware or software module which was updated in the work package data 136, auser of the administrator system 110 selects which of the customer systems 120 receive the work package data 136. One advantage of the customer configurable support system 100 is that since all customer systems contain a large portion of shared common data, that common data can be maintained at a central distribution point and pushed down to every customer that needs it rather than having to separately update that data at each customer deployment site. This will lower the required effort to apply changes while also ensuring that the data is consistently modified across multiple customer deployments.

In one embodiment, for example, the processor 115 of the administrator system 110 may create a delta file for each selected customer system 120. (Step 215). In one embodiment, for example, the delta file may merely include a list the changes made relative to the control data 152 and/or production data 154 for the corresponding customer system 120. In other embodiments, the delta file may also include a script which scripts all of the changes that have to be made to the control data 152 and production data 154 of a respective customer system 120 to complete the update. The script, for example, may be an executable program that a user of the customer system 120 can execute to automatically update their respective customer system 120. One advantage of transmitting the delta file is that it minimizes the amount of data to be transmitted for the update. However, one of ordinary skill in the art would recognize that the entire work package data 136 could simply be transmitted to the respective customer system 120.

In one embodiment, for example, the processor 115 of the administrator system 110 may update the control data 132 and production data 134 stored in the memory 130 for each of the selected customer systems 120. (Step 220). As discussed above, the processor 115 of the administrator system 110 may create a delta file. In order to accurately create the delta file, the current configuration (i.e., control data 152) of a respective customer system 120 and the production data 154 being used by the customer system 120 must be known by the administrator system 110. Accordingly, in one embodiment, for example, the processor 115 may update the respective control data 132 and production data 134 saved in the memory 130 for the respective customer system 120based upon the work package data 136 being sent to the respective customer system 120. However, as discussed in further detail below, the processor 115 could wait to receive feedback from the respective customer system 120 before updating the control data 132 and production data 134 in the memory 130. In yet other embodiments, for example, the processor 115 may update the control data 132 and production data 134 in the memory 130 based upon the data sent to the respective customer system 120 and then further update the control data 132 and production data 134 in the memory 130 based upon the feedback from the respective customer system 120.

The processor 115 of the administrator system 110 then transmits the data, either the delta file, the work package data 136 or both, to the respective customer systems 120. (Step 225). In one embodiment, for example, the data may be transmitted via a dynamic transport. In another embodiment, for example, the data may be transmitted via email. However, one or ordinary skill in the art would recognize that the data may be transmitted via any wired or wireless transmission protocol over the communication bus 140. A dynamic transport may be, for example, a computer based queuing mechanism that connects multiple computers together and guarantees that the data transmitted from one system is received by all appropriate destination systems. In other embodiments, such as email, for example, the system cannot guarantee that that the transmitted data will be received by the expected systems and applied to them since the email address could be wrong or the recipient could fail to apply the data to the system after they receive it.

The processor 125 of the selected customer systems 120 then save the received data as work package data 156. (Step 230). In other words, the control data 152 and production data 154 of the selected customer systems 120 is not updated upon receipt of the work package data 136 from the administrator system 110. This allows each customer the opportunity to audit the received data before the respective customer system 120 is updated. (Step 235). One advantage of saving the received data as work package data 156 is that the customer can updated the production data 154 of the customer system 120 only when the customer is ready. Each proposed change to the production data 154 in the work package data 156 can be accepted, rejected, modified or postponed (i.e., saved for a later integration into the production data 154) by a user of the customer system 120. Accordingly, while support via updates to software and/or hardware modules in the customer system 120 is received from the administrator system 110, the users of the customer system 120 have ultimate control over when and how the customer system 120 is updated. After the work package data 156 has been fully audited by a user of the customer system 120, the control data 152 and/or production data 154 can be updated. (Step 240). In one embodiment, for example, the control data 152 and/or production data 154 may be completely replaced by the work package data 156. In another embodiment, for example, if a delta file was received from the administrator system 110, the processor 125 of the customer system 120 may update the control data 152 and/or production data 154 based upon the delta file.

In one embodiment, for example, a user of the customer system 120 may modify the respective production data 154 to create updated work package data 156. (Step 245). The work package data 156 may be a modified version of the work package data 136 transmitted from the administration system 110 or may be created independent of the work package data 136 transmitted from the administration system 110. The work package data 156 can be audited and incorporated into the production data 154 in the same manner as the work package data 136 received from the administrator system 110 described in Steps 235-240.

The processor 125 of the customer system 120 can optionally transmit the updates to other customer systems 120 and/or back to the administrator system 110. (Step 250). In one embodiment, for example, a company may have many multiple customer system 120. However, one or more of their customer systems 120 may be selected as a gateway for updates to their other customer systems 120.A user of the gateway customer system 120 may select when and to which other customer systems 120to send an update. The gateway customer system 120 may, for example, send the work package data 156 to the other customer systems 120, allowing a user of each other customer system 120 the opportunity to review and/or change the received work package data 156 before implementing the update by updating the control data 152 and/or production data 154. In another embodiment, for example, the gateway customer system 120 may create update packages for one or more of the other customer systems. The update packages, for example, may include delta files and scripts to immediately implement the update at the other selected customer systems 120. As noted above, a customer system 120 may also transmit an update back to the administrator system 110. A modification to the control data and/or production data 154 found to be useful, for example, could be transmitted back to the administrator system 110.

In embodiments where work package data 156 is transmitted to one or more other customersystems 120 delegated the authority to review and/or modify the work package data 156, the respective systems may then save the received data as work package data 136 and 156, respectively. (Steps 255). As discussed above, one or more customer system 120 may be a gateway for receiving updates to other customer systems 120. A respective customer system 120 makeapprove, deny or modify the received work package data 156 when the respective customer system 120 has the authority to do so. (Step 260). In one embodiment, for example, the control data 152 of each respective customer system 120 may indicate whether or not the respective customer system 120 has the authority to review and/or modify received updates. However, as discussed above, the gateway customer system 120 may simply send the work package data 156 to the systems who have the authority to make changes to the update while sending instructions to immediately update a respective customer system 120 when the respective customer system 120 does not have authority.

When a respective other customer system 120 is not delegated the authority to review or update the work package data 156, the received work package data 156 may immediately be used to update the control data 152 and/or production data 154 saved in the memory 150 of the respective customer system. (Step 265). Likewise, after a respective customer system 120 has approved, rejected and/or modified any of the updates in step 260, the control data 152 and/or production data 154 saved in the memory 150 of the respective customer system. (Step 265).

When the work package data 156 is transmitted to the administrator system 110, the processor 115 saves the received data in the memory 150 as work package data 136. (Step 270). In one embodiment, for example, the work package data 156 may be transmitted back to the administrator system 110 shortly after the administrator system 110 has transmitted an update to the customer system 120. However, a user of the customer system 120 can provide the administrator system 110 with the work package data 156 any time a user of the respective customer system 120 modifies the control data 152 and/or production data 154 saved in the memory 150 of the customer system 120. Because updates to the control data 152 and production data 154 are transmitted back the administrator system 110, the administrator system 110 can keep track of the control data 152 and production data 154 active on the respective customer system 120 such that future updates sent by the administrator system take into account the modifications made by the specific customer system 120. Furthermore, the administrator system 110 can redistribute the update made by one of the customer systems 120 to other customer systems thereby sharing improvements made in one customer system 120 with other customer systems.

When changes (i.e., rejections or modifications) were made by a user of a customer system 120 relative to the last work package data 136 transmitted to the customer system 120, a user of the administrator system 110 has the opportunity to approve, reject or further modify any of the changes to the work package data 136. (Step 275). As discussed above, one of the changes proposed by a user of the customer system 120 could be redistributed to other customer systems 120. Rejected or modified changes can be noted such that the next update sent to the customer system 120 can reflect the rejected or modified changes. The processor 115 then saves the work package data 136 as control data 132 and production data 134 for the respective customer system 120. (Step 280). When no changes (i.e., rejections or modifications) were made to the previously transmitted work package data 136, the processor 115 updates the control data 132 and production data 134 for the respective customer system 120 if the processor 115 has not already done so in Step 220.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A customer configurable support system, comprising:
a memory configured to store control data, the control data indicating a configuration for each a plurality of customer systems, the memory further configured to store production data, the production datacomprising data used by each of the plurality of customer systems to control the operation of at least one configurable component for each of the plurality of customer systems; and
a processor communicatively coupled to the memory, the processor configured to:
receive work package data, the work package data including a first update to at least one of the control data and the production data stored in the memory;
receive a selection of at least a subset of the plurality of customer system to receive the work package data; and
transmit the work package data to the selected plurality of customer systems.

2. The customer configurable support system of claim 1, wherein the processor is further configured to:
update the at least one of the control data and the production data stored in the memory for each of the selected plurality of customer systems based upon the work package data transmitted to each of the selected plurality of customer systems.

3. The customer configurable support system of claim 1, wherein the processor is further configured to:
create, for each of the selected plurality of customer systems, a delta file, the delta file including instructions for updating the one of the control data and production data on the respective customer system,
wherein the transmit the work package data to the selected plurality of customer systems further comprising transmitting the created delta file.

4. The customer configurable support system of claim 1, wherein the processor is further configured to:
receive work package data from one of the plurality of customer systems;
receive approval for a second update to one of the control data and production data;
receive selection of at least one customer system to receive the second update; and
updating the at least one of the control data and production data for each of the selected customer systems.

5. The customer configurable support system of claim 1, wherein at least one of the at least one configurable components is a standardized execution application module, the standardized execution application module being be a basic, un-modifiable software object containing instructions to perform one of a plurality of different standardized functions after being configured by the control data and the production data.

6. A method for controlling a customer configurable support system, comprising:
receiving, by a processor of an administrator system communicatively coupled to a plurality of customer systems, work package data, the work package data including at least oneupdate for a configurable component in at least one of the plurality of customer systems;
receiving, by the processor of the administrator system, a selection of the customer systems to receive the work package data;
transmitting, by the processor of the administrator system to a processor of the selected customer systems, the work package data;
storing, by the processor of the selected customer systems, the work package data in memory;
receiving, by the processor of the selected customer systems, an approval, rejection or modification for each of the at least one updates; and
updating, by the processor of the selected customer systems, control data indicating a configuration for each a plurality of customer systems and production data comprising data used by each of the plurality of customer systems to control the operation of the configurable component based upon the received approval, rejection or modification for each of the at least one updates.

7. The method according to claim 6, wherein the transmitting further comprises:
creating, by the processor of the administration system, a delta file for each of the selected customer systems by comparing control data and production data for each customer system with the work package data and generating instructions for each customer system based upon a difference between the work package data and the respective control data and production data for each customer system; and
transmitting, by the processor of the administration system, each respective delta file to respective selected customer systems.

8. The method according to claim 6, wherein the creating further comprises creating, for each delta file, a script to execute the update based upon the comparison.

9. The method according to claim 6, further comprising:
receiving, by a processor of one of the plurality of customer systems, updated work package data, the updated work package data including an second update to at least one of control data and production data stored in a memory of the customer system.

10. The method according to claim 9, further comprising:
receiving, by the processor of one of the plurality of customer systems, a selection of at least one other customer systems to receive the updated work package data; and
transmitting, by the processor of one of the plurality of customer systems, the updated work package to the selected at least one other customer system.
